(19) Europäisches Patentamt
European Patent Office
Office européen des brevets

(11) **EP 2 709 877 B1**

(12) **EUROPÄISCHE PATENTSCHRIFT**

(45) Veröffentlichungstag und Bekanntmachung des Hinweises auf die Patenterteilung:
**29.04.2015 Patentblatt 2015/18**

(21) Anmeldenummer: **12719603.8**

(22) Anmeldetag: **08.05.2012**

(51) Int Cl.:
**B60R 21/0136** *(2006.01)*

(86) Internationale Anmeldenummer:
**PCT/EP2012/001968**

(87) Internationale Veröffentlichungsnummer:
**WO 2012/156042 (22.11.2012 Gazette 2012/47)**

(54) **KRAFTFAHRZEUG MIT KAPAZITIVEM DEFORMATIONSSENSOR ZUR KOLLISIONSDETEKTION**

MOTOR VEHICLE HAVING A CAPACITIVE DEFORMATION SENSOR FOR COLLISION DETECTION

VÉHICULE AUTOMOBILE À CAPTEUR DE DÉFORMATION CAPACITIF POUR LA DÉTECTION DE COLLISION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2011 DE 102011101863**

(43) Veröffentlichungstag der Anmeldung:
**26.03.2014 Patentblatt 2014/13**

(73) Patentinhaber: **Audi AG**
**85045 Ingolstadt (DE)**

(72) Erfinder: **GEISS, Markus**
**86753 Möttingen (DE)**

(74) Vertreter: **Thielmann, Frank**
**AUDI AG**
**Patentabteilung**
**85045 Ingolstadt (DE)**

(56) Entgegenhaltungen:
**DE-A1- 4 242 230      DE-C1- 19 718 803**
**JP-A- 2000 177 514      US-A1- 2007 102 220**

**Beschreibung**

Die Erfindung betrifft ein Kraftfahrzeug umfassend einen frontseitig, heckseitig und/oder seitlich vorgesehenen Metallbauteil, insbesondere einem Stoßfänger, sowie wenigstens eine Sensoreinrichtung umfassend einen kapazitiv arbeitenden Sensor und eine zugeordnete Steuerungseinrichtung zur Kollisionserfassung, wobei der Sensor an einem Metallbauteil angeordnet und als Flächensensor ausgebildet ist, der sich über wenigstens die Hälfte der Breite des Metallbauteils erstreckt, wobei seitens der Steuerungseinrichtung aus einer Kollision mit einem Objekt resultierende Informationen anhand der sich durch eine kollisionsbedingte Verformung des Sensors ändernden Kapazität des Sensors ermittelbar sind, wobei der Sensor als Plattenkondensator ausgeführt ist, und auf dem Metallbauteil, insbesondere dem Stoßfänger, das eine Kondensatorelektrode bildet, eine Schicht aus einem Dielektrikum aufgebracht ist, auf welcher eine zweite Kondensatorelektrode aufgebracht ist,

Moderne Kraftfahrzeuge umfassen verschiedene Rückhaltemittel wie beispielsweise einen Airbag oder Gurtstraffer, die dem Insassenschutz dienen. Diese Rückhaltemittel werden über entsprechende Steuerungseinrichtungen im Kollisionsfall angesteuert, wobei die Ansteuerung nicht statisch ist, sondern sich gegebenenfalls auch abhängig von dem Kollisionsvorgang respektive der Kollisionsschwere gestaltet. Infolgedessen ist bei modernen Kraftfahrzeugen eine Kollisionserfassungsmöglichkeit vorgesehen, die es ermöglicht, Daten zu erfassen, die als Grundlage für eine Berechnung der Kollisionsschwere dienen können. Üblicherweise werden hierfür Beschleunigungssensoren in der Fahrzeugfront verwendet, wobei aber auch, siehe z. B. JP 2000326808 A, ein kapazitiv arbeitender Kollisionssensor zur Datenerfassung verwendet werden kann, der seine Kapazitäten in Abhängigkeit der tatsächlich erfolgenden Kollision verändert. Die Datenerfassung und Auswertung muss sehr schnell erfolgen, in der Regel steht hierfür ein Zeitraum von 20 - 50 ms zur Verfügung. Die der Kollisionserfassungseinrichtung zugeordnete Steuerungseinrichtung ermittelt nun aus den aufgenommenen Messwerten Kollisionsinformationen wie beispielsweise die relative Kollisionsgeschwindigkeit oder die Überdeckung mit dem Kollisionsgegner. Hierfür sind in der Fahrzeugfront verteilt mehrere punktuell arbeitende Sensoren vorgesehen.

Da die verbauten Sensoren nur punktuell arbeiten, also aufgrund ihrer geringen Größe eben nur in einem relativ kleinen Bereich bezogen auf die gesamte mögliche Kollisionsfläche arbeiten, ist infolgedessen die relative Kollisionsgeschwindigkeit nur relativ grob zu ermitteln, was aus der mitunter nur lokalen Interaktion des eigenen Fahrzeugs, sei es frontseitig oder heckseitig, mit verschiedenen Kollisionsgegnern resultiert, die darüber hinaus auch unterschiedliches Steifigkeitsverhalten besitzen (beispielsweise verhält sich eine Mauer, gegen die das eigene Fahrzeug fährt, wesentlich steifer als ein Fahrzeug, das über eigene Knautschzonen verfügt). Aufgrund der punktuellen Erfassungsfunktion der Sensoren ist des Weiteren eine Abschätzung der Überdeckung mit dem Kollisionsgegner kaum möglich. Wegen dem sehr kurzen Entscheidungszeitraum bis zur Ansteuerung respektive Auslösung der Rückhaltemittel ist eine Erkennung der beaufschlagten Seite im Kollisionsfall problematisch.

Ein Kraftfahrzeug der eingangs genannten Art mit den Merkmalen des Oberbegriffs des Patentanspruchs 1 ist aus JP 2000 177514 A bekannt.

Der Erfindung liegt damit das Problem zugrunde, ein Kraftfahrzeug anzugeben, das eine verbesserte Kollisionserfassung und daraus resultierend eine verbesserte Ermittlung von Kollisionsinformationen, die als Grundlage für die Ansteuerung von Rückhaltemitteln dienen, ermöglicht.

Zur Lösung des Problems ist bei einem Kraftfahrzeug der eingangs genannten Art erfindungsgemäß vorgesehen, dass die zweite Kondensatorelektrode in einzelne voneinander isolierte Elektrodenabschnitte unterteilt ist, wobei jeder Elektrodenabschnitt mit der Steuerungseinrichtung verbunden ist.

Das erfindungsgemäße Kraftfahrzeug weist mit besonderem Vorteil einen Flächensensor auf, also einen Sensor, der sich über eine große Fläche erstreckt, wenigstens über die halbe Breite des Metallbauteils, an dem er angeordnet ist. Ein solches Metallbauteil kann z.B. ein Stoßfänger sein, aber auch ein anderes metallenes Bauteil der Fahrzeugstruktur, z.B. ein seitlich verbauter Türaufprallträger oder ein Schweller oder ein anderer Quer- oder Längsträger der Fahrzeugstruktur bzw. Karosserie. Jedes Kraftfahrzeug verfügt z.B. über einen Stoßfänger, üblicherweise aus Stahl oder Aluminium, der zumeist hinter einer Front- und Heckverkleidung angeordnet ist. An diesem Stoßfänger, mithin also ebenfalls hinter der Heckverkleidung, befindet sich der Flächensensor, der sich in diesem Fall über mindestens die Hälfte der Stoßfängerbreite, bevorzugt über wenigstens 80% der Stoßfängerbreite, und vornehmlich über die gesamte Stoßfängerbreite erstreckt. Aufgrund der Großflächigkeit des Sensors ist es möglich, mit ihm eine große Erfassungsfläche oder einen großen Erfassungsbereich zu definieren, innerhalb welchem eine etwaige Kollision quasi unmittelbar auf den Sensor durchgreift, dieser also direkt beeinflusst wird, so dass die von ihm abgegriffenen Daten folglich mehr oder weniger unmittelbar ein Maß für die Kollision darstellen. Hieraus resultiert, dass Kollisionsinformationen wie beispielsweise die relative Geschwindigkeit und insbesondere auch die Überdeckung sehr genau erfasst werden können. Denn anders als im Stand der Technik, wo quasi eine punktuelle Messung erfolgt, nachdem die Sensoren nur kleinformatige, lokale Sensoren sind, bietet der Flächensensor eine großflächige Datenerfassungsebene.

Der Flächensensor arbeitet kapazitiv, wobei sich seine Kapazität bei einer kollisionsbedingten Verformung ändert. Diese Kapazitätsänderung wird seitens der Steuerungseinrichtung erfasst und ausgewertet, worauf basierend die entsprechenden Daten, die nachfolgend der Rückhaltemittelansteuerung zugrunde gelegt werden, ermittelt werden.

Wie bereits beschrieben erstreckt sich der Sensor bevorzugt über wenigstens 80% der Bauteilbreite, also z.B. der Stoßfängerbreite, bevorzugt über seine gesamte Breite. Er erstreckt sich des Weiteren auch wenigstens über die halbe Höhe des Metallbauteile, also z.B. des Stoßfängers, vorzugsweise über die gesamte Höhe des Metallbauteils. Je größer der Flächensensor, umso größer die Datenerfassungsfläche und umso genauer die Datenerfassung.

Der Sensor selbst ist gemäß einer Weiterbildung der Erfindung als Plattenkondensator ausgeführt, wobei der metallene Stoßfänger, wie beschrieben aus Aluminium oder Stahl, eine der Kondensatorelektroden bildet. Das heißt, dass ein von Haus aus bereits vorhandenes Bauteil in einer zusätzlichen Funktion, hier als Kondensatorelektrode, eingesetzt wird. Zur Sensorausbildung ist gemäß einer Weiterbildung der Erfindung auf dem Metallbauteil wie z.B. einem Stoßfänger eine Schicht aus einem Dielektrikum aufgebracht, auf welcher eine zweite Kondensatorelektrode aufgebracht ist, worüber der kapazitiv arbeitende Sensor als solcher komplettiert wird. Der Aufbau des Sensors ist also sehr einfach, wie er auch in der Größe entsprechend ausgelegt werden kann.

Das Dielektrikum selbst ist bevorzugt ein Kunststoff, insbesondere ein geschäumter Kunststoff. Verwendet werden kann beispielsweise ein geschäumter Thermoplast oder ein geschäumtes Elastomer. In einer konkreten Erfindungsausgestaltung kann als geschäumter Kunststoff expandiertes Polypropylen verwendet werden. Wichtig ist, dass das Dielektrikum einerseits hinreichende dielektrische Eigenschaften besitzt, zum anderen auch eine entsprechende Verformbarkeit besitzt, so dass es sich im Kollisionsfall verformt. Aus dieser Verformung resultiert eine Variation des Abstands der beiden Kondensatorelektroden zueinander, in dem Bereich, in dem die Kollision stattfindet. Aus der Abstandsänderung resultiert wiederum eine Änderung der Kapazität des Plattenkondensatorsensors. Die Kapazität kann wiederum messtechnisch ermittelt werden, wie auch der zeitliche Verlauf der Kapazitätsänderung, worauf basierend wiederum die entsprechenden Kollisionsparameter ermittelt werden können. Als Dielektrikum kann z.B. ein häufig verwendeter Fußgängerschutzschaum verwendet werden.

Das Dielektrikum selbst besitzt eine Dicke im Bereich von 1 - 10 cm, insbesondere von 3 - 7 cm, vorzugsweise von ca. 5 cm. Dies bietet einen hinreichenden Verformungsweg und damit einen hinreichenden Weg, über den der Elektrodenabstand variieren kann.

Die zweite Kondensatorelektrode ist einer vorteilhaften Weiterbildung mittels einer Metallfolie, einem gegebenenfalls faserverstärkten Metallgewebe oder einer abgeschiedenen Metallschicht gebildet. Jede dieser Ausgestaltungen bietet die Möglichkeit, eine großflächige Kondensatorelektrode auszubilden. Bevorzugt wird Aluminium verwendet bzw. enthält die Metallfolie, das Metallgewebe oder die Metallschicht Aluminium. Die Dicke der Metallfolie, des Metallgewebes oder der Metallschicht liegt bevorzugt im Bereich von 10-1000 μm, insbesondere im Bereich von 100 - 500 μm. Sie ist möglichst gering zu wählen, um Material zu sparen, zumal der Kondensatorelektrode ja lediglich die Elektrodeneigenschaft, sonst aber keine weitere Eigenschaft zukommt. Die Elektrode ist auch ausreichend flexibel, so dass sie sich bei einer Kollision sofort verformt und sich so der Elektrodenabstand und damit die Kapazität ändert. Auch lokal gesehen sehr kleine Verformungen und/oder vom Verformungsgrad sehr geringe Verformungen führen zu einer Abstands- und damit Kapazitätsänderung und können damit erfasst und berücksichtigt werden. Aufgrund der Flächigkeit ist eine Verformung ferner an einem beliebigen Ort über die Sensorfläche möglich, d.h., dass die Verformung und damit die Signalerzeugung folglich unmittelbar dort erfolgt, wo der kollisionsbedingte Krafteintrag erfolgt, der quasi beliebig sein kann, also z.B. punktuell oder großflächig, je nach Kollisionsobjekt und Kollisionsschwere.

Zur einfachen Verarbeitbarkeit wie auch zum Schutz dieser Kondensatorelektrode ist gemäß einer zweckmäßigen Weiterbildung der Erfindung die Metallfolie, das Metallgewebe oder die abgeschiedene Metallschicht auf einem Träger, insbesondere einem Kunststoffträger, aufgebracht. Sie kann auch für eine vollständige Kapselung zwischen zwei Trägern, insbesondere Kunststoffträgern, angeordnet sein. Vornehmlich wird sie insbesondere im Falle der Metallfolie oder des Metallgewebes hierauf verklebt, eine Metallschicht kann gegebenenfalls direkt darauf abgeschieden werden. Der Träger dient einerseits der Stabilisierung, andererseits auch dem Schutz der sehr dünnen Elektrode. Ein solcher Träger kann beispielsweise eine Kunststofffolie, insbesondere aus Polyester ein. Diese Folie sollte möglichst reiß- und schlagfest sein, also hinreichend stabil. Sie sollte ebenfalls möglichst dünn sein, die Dicke sollte im Bereich von 100 - 1000 μm liegen, um die Verformung der Elektrode als unmittelbare Reaktion auf einen kollisionsbedingten Krafteintrag sicherzustellen.

Eine besonders zweckmäßige Weiterbildung der Erfindung sieht vor, die zweite Kondensatorelektrode, insbesondere durch mehrere Schlitze, in einzelne voneinander isolierte Elektrodenabschnitte zu unterteilen, wobei jeder Elektrodenabschnitt mit der Steuerungseinrichtung verbunden ist. Hieraus resultiert, dass die zweite Kondensatorelektrode, beispielsweise gebildet durch die Metallfolie oder das Metallgewebe, in mehrere einzelne Sektoren unterteilt ist, wobei jeder Sektor auf der anderen Seite über den einteiligen Stoßfänger als anderer Kondensatorelektrode abgeschlossen ist. Diese einzelnen Elektrodensektoren liegen, horizontal gesehen, bevorzugt nebeneinander, so dass sich in horizontaler Richtung eine Reihe nebeneinander liegender einzelner Kondensatorsektoren ergibt. Jeder Kondensatorsektor ist separat mit der Steuerungseinrichtung verbunden, das heißt, dass sektorbezogen separate Daten erfasst werden können. Dies ermöglicht es mit besonderem Vorteil, die Überdeckung noch genauer zu erfassen. Denn im Kollisionsfall kann beispielsweise nur ein Kondensatorsektor betroffen sein, der deformiert wird und der daraus resultierend ein anderes Signal liefert als die anderen Sektoren, so dass, abhängig von der Größe des einzelnen Sektors, eine noch genauere lokale Kollisionsbestimmung erfolgen kann. Beispielsweise ist die zweite Kondensatorelektrode in fünf Sektoren oder Segmente unterteilt, so dass sich insgesamt fünf einzelne Kondensatorsegmente oder Sektoren ergeben, wobei natürlich auch eine noch feinere Unterteilung möglich ist.

Weitere Vorteile, Merkmale und Einzelheiten der Erfindung ergeben sich aus dem im folgenden beschriebenen Ausführungsbeispiel sowie anhand der Zeichnungen. Dabei zeigen:

Fig. 1    eine Prinzipdarstellung eines Teils eines erfindungsgemäßen Kraftfahrzeugs mit Darstellung eines frontseitig integrierten Flächensensors,

Fig. 2    eine Prinzipdarstellung der Ausführung einer zweiten Kondensatorelektrode des erfindungsgemäß integrierten Flächensensors,

Fig. 3    die zweite Kondensatorelektrode aus Fig. 2 mit daran angeordnetem Dielektrikum,

Fig. 4    eine Aufsicht als Prinzipdarstellung auf den gesamten kapazitiv arbeitenden Flächensensor,

Fig. 5    ein Ersatzschaltbild für den Flächensensor,

Fig. 6    ein Prinzipschaltbild der Auswerteeinheit der Steuerungseinrichtung, und

Fig. 7    zwei idealisierte Messkurven.

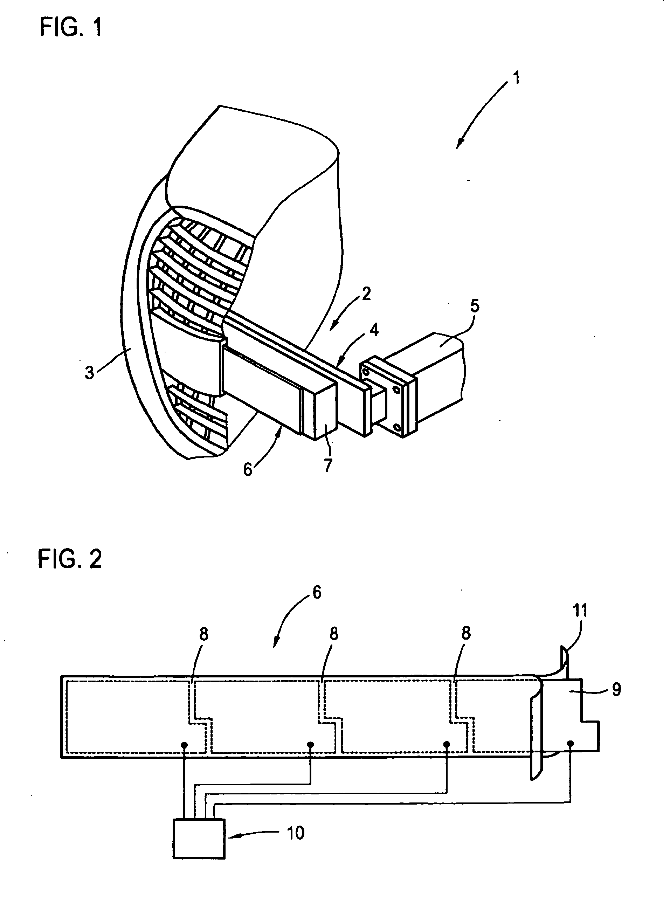

Fig. 1 zeigt eine Teilansicht eines erfindungsgemäßen Kraftfahrzeugs 1, hier der Fahrzeugfront mit einem frontseitig integrierten, kapazitiv arbeitenden Sensor 2. Ein solcher Sensor 2 kann selbstverständlich auch am Fahrzeugheck vorgesehen sein.

Der Sensor 2 ist bei dem beschriebenen Ausführungsbeispiel hinter einer Frontverkleidung 3 an einem Metallbauteil in Form eines Stoßfänger 4, der seinerseits an Längsträgern 5 befestigt ist, angeordnet, wobei der Stoßfänger 4 Teil des Sensors 2 ist. Der Sensor 2 erstreckt sich über wenigstens die halbe Länge und Höhe des Stoßfängers 4, vorzugsweise über nahezu seine gesamte Länge und Höhe, damit die Sensorfläche möglichst groß ist.

Der Sensor 2 ist als kapazitiv arbeitender Flächensensor ausgebildet, nämlich in Form eines Plattenkondensators. Ein solcher Plattenkondensator zeichnet sich durch zwei plattenförmige Elektroden aus, zwischen denen ein Dielektrikum angeordnet ist. Im gezeigten Ausführungsbeispiel werden diese beiden Kondensatorelektroden mittels einer Sensorfolie 6, die nachfolgend noch näher beschrieben wird, und dem Stoßfänger 4 aus Stahl oder Aluminium realisiert. Zwischen ihnen ist ein Dielektrikum 7 angeordnet, beispielsweise ein Thermoplast oder Elastomer, gegebenenfalls geschäumt. Auf die konkrete Funktionsweise des erfindungsgemäß vorgesehenen Sensors 2 wird nachfolgend noch eingegangen, zunächst wird sein konstruktiver Aufbau näher erläutert.

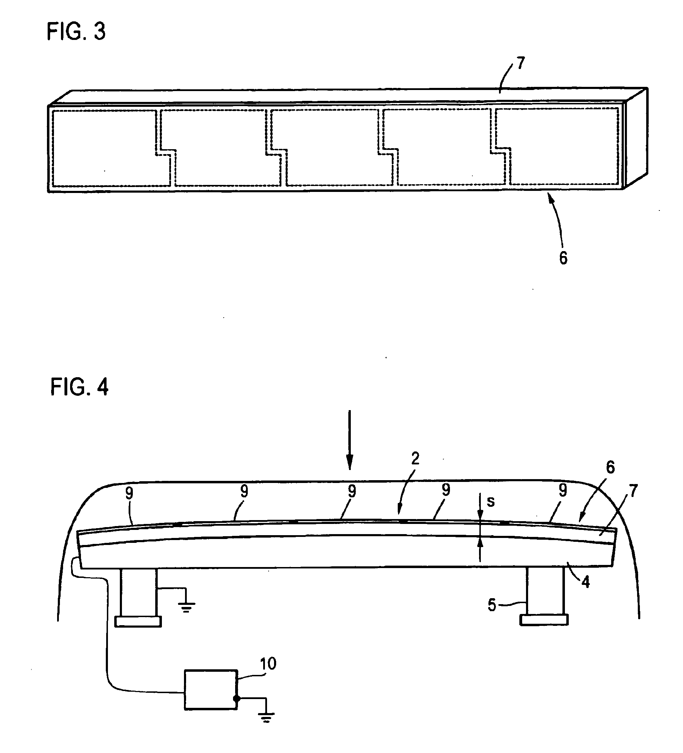

Fig. 2 und 3 zeigen in Form einer Prinzipdarstellung die Sensorfolie 6, die eine Kondensatorelektrode darstellt. Die Sensorfolie 6 umfasst im gezeigten Ausführungsbeispiel fünf voneinander über Schlitze 8 getrennte, also isolierte (und, da zwischen zwei Trägern angeordnet, z.T gestrichelt gezeichnete) Elektrodensegmente 9 (siehe Fig. 3), die beispielsweise mittels einer Metallfolie, beispielsweise einer Aluminiumfolie, oder einem Metallgewebe, beispielsweise aus Aluminiumfäden, gebildet sind. Die Elektrodensegmente 9 bilden in ihrer Gesamtheit die Kondensatorelektrode, sie dienen jedoch zur Ausbildung einzelner Kondensatorsegmente, worauf nachfolgend noch eingegangen wird. Jedes Elektrodensegment 9 ist, wie in der Prinzipdarstellung gemäß Fig. 2 gezeigt, separat mit der Steuerungseinrichtung 10 verbunden, die die Signalauswertung und damit Kollisionsparameterermittlung vornimmt. Infolge der gezeigten Verwendung von fünf Kondensatorelektroden 9 ergeben sich also hier fünf separate Plattenkondensatoren, mithin also fünf Sensorsegmente, an denen jeweils separate Signale abgegriffen werden können.

Die sehr dünnen Kondensatorelektrodensegmente 9, beispielsweise bestehend aus einer Metallfolie mit einer Dicke von 100 - 500μm, sind im gezeigten Beispiel zwischen zwei Trägern 11 aufgenommen, mithin also vollständig gekapselt, wobei die Träger 11 jeweils aus einer sehr dünnen Kunststofffolie bestehen, beispielsweise einer Polyesterfolie, auf die die Kondensatorelektrodensegmente 9 aufgeklebt sind und die ihrerseits miteinander verklebt sind. Es bildet sich folglich eine geschlossene Sensorfolie 6 aus, die als vorgefertigtes Bauteil verarbeitet werden kann.

Die Sensorfolie 6 wird sodann auf das das Dielektrikum bildende Elastomer 7 aufgesetzt, beispielsweise ebenfalls aufgeklebt, so dass die Sensorfolie 6 und das Elastomer 7 als separate Baueinheit ausgeführt werden können, die dann am Stoßfänger 4 angeordnet wird. Das Elastomer 7, beispielsweise expandiertes Polypropylen, besitzt eine Dicke von beispielsweise 5 cm, so dass ein hinreichender Abstand zwischen den Elektrodensegmenten 9 respektive der von ihnen gebildeten frontseitigen Elektrode und dem Stoßfänger 4, also der rückseitigen Elektrode gegeben ist, der im Kollisionsfall den Verformungsweg darstellt.

Fig. 4 zeigt als Prinzipdarstellung eine Aufsicht auf den verbauten Sensor 2. Gezeigt ist wiederum die Sensorfolie 6 mit ihren hier prinzipiell dargestellten fünf separaten Elektrodensegmenten 9, das Dielektrikum 7 sowie der Stoßfänger 4, der die andere Kondensatorelektrode bildet. Der Stoßfänger 4 ist über die Längsträger 5 an Masse gelegt, Entsprechendes gilt für die Steuerungseinrichtung 10, die wie aus Fig. 2 ersichtlich ist mit den jeweiligen Kondensatorelektrodensegmenten 9 gekoppelt ist, wobei in Fig. 4 nur eine Kopplungsleitung gezeigt ist.

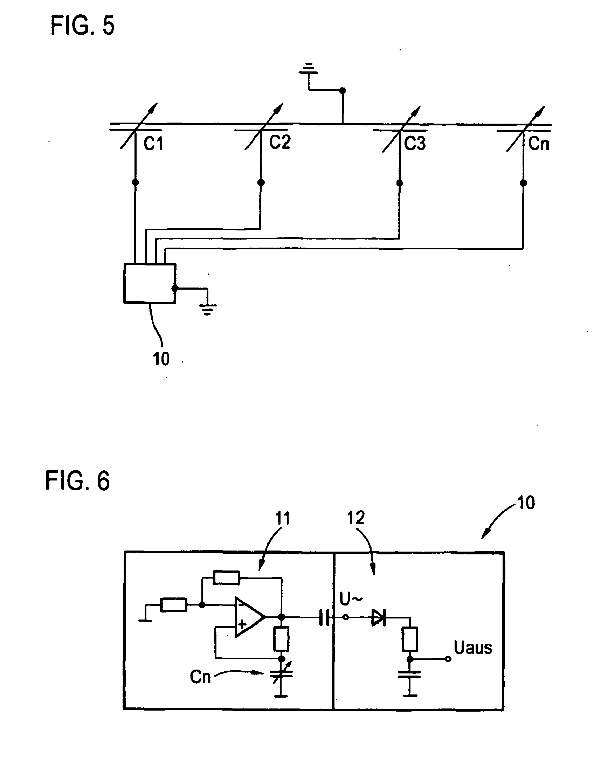

Insgesamt ergeben sich, siehe das Ersatzschaltbild aus Fig. 5, folglich mehrere einzelne Kondensatoren C1 - C2, C3 ... Cn, wobei im gezeigten Ausführungsbeispiel n = 5 ist. Selbstverständlich besteht die Möglichkeit, anstelle der in den Figuren gezeigten fünf Kondensatorelementsegmenten gemäß Fig. 3 noch mehr separate Elektrodensegmente vorzusehen und damit mehr separate einzelne Kondensatorsegmente Cn zu bilden.

Ersichtlich ist jeder einzelne Kondensator respektive das einzelne Kondensatorsegment C1 - Cn mit der Steuerungseinrichtung verbunden, die also kondensatorsegmentspezifische Messwerte aufnimmt.

Wie aus Fig. 4 ersichtlich ist, sind die Elektrodensegmente 9 und der Stoßfänger 4 respektive dessen Oberfläche, auf der das Dielektrikum 7 aufsitzt, um den Abstand s voneinander beabstandet. Dieser Abstand ist bevorzugt für alle Kondensatorsegmente gleich, kann aber auch unterschiedlich sein, solange der jeweils konkrete Abstand bekannt ist. Hieraus ergibt sich die Kapazität C der einzelnen Kondensatorsegmente zu:

$$C = \varepsilon_0 \cdot \varepsilon_r \cdot \frac{A}{s}$$

mit:

     $\varepsilon_0$ = Elektrische Feldkonstante
     $\varepsilon_r$ = Dielektrizitätszahl
     A = Fläche eines Elektrodensegments 9
     s = Elektrodenabstand.

Wird nun aufgrund einer Kollision (siehe die in Fig. 4 mit dem Pfeil dargestellte Stoßrichtung) und daraus resultierend eine Krafteinwirkung der Abstand s verändert, mithin also ein Kondensatorelektrodensegment 9 vollständig oder auch nur lokal in Richtung des Stoßfängers 4 bewegt, so ändert sich die Kapazität des jeweils beaufschlagten Kondensatorsegments in Abhängigkeit von s. Die Kapazität ergibt sich prinzipiell zu:

$$C = \frac{1}{U} \int I dt$$

Mit:

     U = Kondensatorspannung
     I = Kondensatorstrom

Vergleicht man nun die Kapazitäten der einzelnen Kondensatorsegmente C1 - Cn, so kann auf den Grad der Überdeckung und die Kollisionsseite geschlossen werden. Ferner ist der Betrag der Kapazität auch ein Maß für den Abstand s der einzelnen Platten gemäß

$$s = \varepsilon_0 \cdot \varepsilon_r \cdot \frac{A}{C}$$

Hieraus ergibt sich die relative Kollisionsgeschwindigkeit $v_{rel}$ zu

$$v_{rel} = \frac{ds}{dt},$$

mit

     t = Zeit.

Weiterhin kann die eingeleitete Kraft F ermittelt werden zu

$$F = -k \cdot s - \mu \cdot v_{rel,}$$

mit

     F = Kraft
     k = Materialkonstante des Dielektrikums
     $\mu$ = Materialkonstante des Dielektrikums

Das heißt, dass aus der Segmentierung des Sensors folglich eine sehr genaue lokale Bestimmung des eigentlichen Kollisionsortes erfolgen kann, da beispielsweise bei einer Kollision im Bereich einer Fahrzeugkante natürlich der oder die kantennah befindlichen Kondensatoren, gegebenenfalls auch nur lokal, deformiert werden und folglich dort zuerst eine Änderung des Abstands und daraus resultierend eine Änderung der Kapazität erfasst wird, verglichen mit den anderen, nicht deformierten Kondensatorsegmenten. Auch kann auf einfache Weise die Kollisionsgeschwindigkeit wie auch die eingeleitete Kraft ermittelt und lokal zugeordnet werden.

Fig. 6 zeigt in Form eines Prinzipschaltbilds den Aufbau der Auswerteeinheit der Steuerungseinrichtung 10. Diese umfasst einen kapazitätsabhängigen Oszillator 11 und einen Frequenz-Amplituden-Demodulator 12. Jedem einzelnen Kondensatorsegment C1 - Cn ist ein eigener Oszillator 11 mit Demodulator 12 zugeordnet. Die Kapazität wird "indirekt" über eine Frequenzmessung gemessen.

Abhängig vom Abstand s der Elektroden eines Kondensatorsegments 9 ändert sich die Kapazität des Kondensators Cn und damit die Frequenz des Oszillators 11. Die Wechselspannung U~ wird durch den Demodulator 12 in eine Gleichspannung $U_{aus}$ umgewandelt, wobei die Amplitudenänderung $\Delta U$ proportional dem Elektrodenabstand s ist. Mit den ermittelten Werten des Plattenabstands s und dem der Größe $\Delta t$ können die Relativgeschwindigkeit $v_{rel}$ und die eingeleitete Kraft F berechnet werden, siehe oben. Die örtliche Auflösung kann durch den Vergleich der einzelnen Kondensatorsegmente erfolgen.

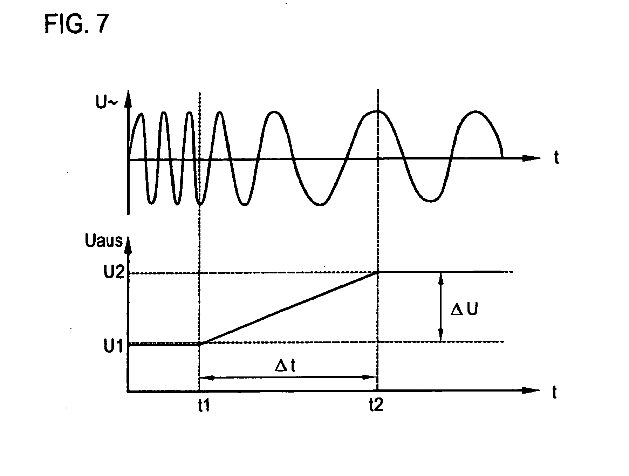

Fig. 7 zeigt in Form zwei idealisierter Messkurven den Signalverlauf im Falle einer linearen Beaufschlagung eines Kondensatorsegments. Bis zum Zeitpunkt t1 ist Cn konstant, die Frequenz der Wechselspannung U~ ist konstant, auch $U_{aus}$ ist konstant, es liegt keine Deformation vor. Im Zeitpunkt t1 beginnt eine lineare Deformation, die bis zum Zeitpunkt t2 fortschreitet. Damit ändert sich der Elektrodenabstand s linear, womit eine ebenfalls lineare Änderung von Cn und damit auch der Wechselspannung U~ einhergeht. Auch die Gleichspannung $U_{aus}$ ändert sich linear. Die Deformation ist im Zeitpunkt t2 abgeschlossen, der Plattenabstand verändert sich sodann nicht mehr. Aufgrund des geringeren Plattenabstands wird nun eine höhere Spannung, nämlich U2 gemessen, die aufgrund der nunmehr gegebenen Konstanz des Abstands s gleich bleibt, wie auch die Frequenz der Wechselspannung U~.

Anstelle der Anordnung des Sensors 2 an einem Stoßfänger kann der Sensor auch an anderen metallenen Bauteilen des Fahrzeugs wie in Türen verbauten Aufprallträgern oder Schwellern oder anderen Quer- oder Längsträgern der Karosserie angeordnet werden, das Funktionsprinzip ist stets das gleiche.

**Patentansprüche**

1. Kraftfahrzeug umfassend einen frontseitig, heckseitig und/oder seitlich vorgesehenen Metallbauteil, insbesondere einem Stoßfänger, sowie wenigstens eine Sensoreinrichtung umfassend einen kapazitiv arbeitenden Sensor und eine zugeordnete Steuerungseinrichtung zur Kollisionserfassung, wobei der Sensor (2) an einem Metallbauteil (4) angeordnet und als Flächensensor ausgebildet ist, der sich über wenigstens die Hälfte der Breite des Metallbauteils (4) erstreckt, wobei seitens der Steuerungseinrichtung (10) aus einer Kollision mit einem Objekt resultierende Informationen anhand der sich durch eine kollisionsbedingte Verformung des Sensors (2) ändernden Kapazität des Sensors (2) ermittelbar sind, wobei der Sensor (2) als Plattenkondensator ausgeführt ist, und auf dem Metallbauteil, insbesondere dem Stoßfänger (4), das eine Kondensatorelektrode bildet, eine Schicht aus einem Dielektrikum (7) aufgebracht ist, auf welcher eine zweite Kondensatorelektrode (9) aufgebracht ist,

**dadurch gekennzeichnet,**
**dass** die zweite Kondensatorelektrode in einzelne voneinander isolierte Elektrodenabschnitte (9) unterteilt ist, wobei jeder Elektrodenabschnitt (9) mit der Steuerungseinrichtung (10) verbunden ist.

2. Kraftfahrzeug nach Anspruch 1,
**dadurch gekennzeichnet,**
**dass** sich der Sensor (2) über wenigstens 80% der Breite des Metallbauteils (4), insbesondere über seine gesamte Breite erstreckt.

3. Kraftfahrzeug nach Anspruch 1 oder 2,
**dadurch gekennzeichnet,**
**dass** sich der Sensor (2) über wenigstens die halbe Höhe, vorzugsweise über die gesamte Höhe des Metallbauteils (4) erstreckt.

4. Kraftfahrzeug nach einem der vorangehenden Ansprüche,
**dadurch gekennzeichnet,**
**dass** das Metallbauteil ein Stoßfänger ist.

5. Kraftfahrzeug nach einem der vorangehenden Ansprüche,
**dadurch gekennzeichnet,**
**dass** das Dielektrikum (7) ein Kunststoff, insbesondere ein geschäumter Kunststoff, vorzugsweise ein Elastomer ist.

6. Kraftfahreug nach Anspruch 5,
**dadurch gekennzeichnet,**
**dass** der geschäumte Kunststoff expandiertes Polypropylen ist.

7. Kraftfahrzeug nach einem der vorangehenden Ansprüche,
**dadurch gekennzeichnet,**
**dass** das Dielektrikum (7) eine Dicke im Bereich von 1 - 10 cm, insbesondere von 3 - 7 cm, vorzugsweise von 5 cm besitzt.

8. Kraftfahrzeug nach einem der vorangehenden Ansprüche,
**dadurch gekennzeichnet,**
**dass** die zweite Kondensatorelektrode (9) mittels einer Metallfolie, einem gegebenenfalls faserverstärkten Metallgewebe oder einer abgeschiedenen Metallschicht gebildet ist.

9. Kraftfahrzeug nach Anspruch 8,
**dadurch gekennzeichnet,**
**dass** die Metallfolie, das Metallgewebe oder die Metallschicht aus Aluminimum ist oder Aluminium enthält.

10. Kraftfahrzeug nach Anspruch 8 oder 9,
**dadurch gekennzeichnet,**

**dass** die Metallfolie, das Metallgewebes oder die Metallschicht eine Dicke von 10 -1 1000$\mu$m, insbesondere von 100 - 500$\mu$m besitzt.

11. Kraftfahrzeug nach einem der Ansprüche 8 bis 10, **dadurch gekennzeichnet,**
    **dass** die Metallfolie, das Metallgewebe oder die abgeschiedene Metallschicht auf einem Träger (11), insbesondere einem Kunststoffträger, oder zwischen zwei Trägern (11), insbesondere Kunststoffträgern angeordnet ist.

12. Kraftfahrzeug nach Anspruch 11, **dadurch gekennzeichnet, dass**
    dass ein Träger (11) eine Kunststofffolie, insbesondere aus Polyester ist.

13. Kraftfahrzeug nach Anspruch 12, **dadurch gekennzeichnet,**
    **dass** ein Träger (11) eine Dicke im Bereich von 100 - 1000$\mu$m besitzt.

14. Kraftfahrzeug nach einem der vorangehenden Ansprüche,
    **dadurch gekennzeichnet,**
    **dass** die zweite Kondensatorelektrode durch mehrere Schlitze (8) in die Elektrodenabschnitte (9) unterteilt ist.


**Claims**

1. Motor vehicle, comprising a metal component provided on a front end, rear end and/or on the side, in particular a bumper, and at least one sensor device comprising a capacitively operating sensor and an associated control device for detecting collisions, wherein the sensor (2) is arranged on a metal component (4) and configured as an area sensor extending over at least half of the width of the metal component (4), the control device (10) being able to determine items of information resulting from a collision with an object by means of the change in capacitance of the sensor (2) caused by collision-related deformation of the sensor (2), the sensor (2) being configured as a plate capacitor, and a layer of a dielectric (7) being applied to the metal component, particularly the bumper (4) which forms a capacitor electrode, on which a second capacitor electrode (9) is applied,
   **characterised in that**
   the second capacitor electrode is subdivided into individual electrode sections (9) isolated from one another, each electrode section (9) being connected to the control device (10).

2. Motor vehicle according to claim 1, **characterised in that** the sensor (2) extends over at least 80% of the width of the metal component (4), and particularly over the entire width thereof.

3. Motor vehicle according to claim 1 or 2, **characterised in that** the sensor (2) extends over at least half the height, preferably over the entire height of the metal component (4).

4. Motor vehicle according to one of the preceding claims, **characterised in that** the metal component is a bumper.

5. Motor vehicle according to one of the preceding claims, **characterised in that** the dielectric (7) is a plastic, particularly a foamed plastic, preferably an elastomer.

6. Motor vehicle according to claim 5, **characterised in that** the foamed plastic is expanded polypropylene.

7. Motor vehicle according to one of the preceding claims, **characterised in that** the dielectric (7) has a thickness in the range from 1 - 10 cm, particularly from 3 - 7 cm, preferably 5 cm.

8. Motor vehicle according to one of the preceding claims, **characterised in that** the second capacitor electrode (9) is formed by means of a metal foil, an optionally fibre-reinforced metal fabric or a deposited metal coating.

9. Motor vehicle according to claim 8, **characterised in that** the metal foil, the metal fabric or the metal coating consists of or contains aluminium.

10. Motor vehicle according to claim 8 or 9, **characterised in that** the metal foil, the metal fabric or the metal coating has a thickness of from 10 - 1000 $\mu$m, particularly from 100 - 500 $\mu$m.

11. Motor vehicle according to one of claims 8 to 10, **characterised in that** the metal foil, the metal fabric or the deposited metal coating is arranged on a carrier (11), particularly a plastics carrier, or between two carriers (11), particularly plastics carriers.

12. Motor vehicle according to claim 11, **characterised in that** a carrier (11) is a plastics film, particularly of polyester.

13. Motor vehicle according to claim 12, **characterised in that** a carrier (11) has a thickness in the range from 100 - 1000 $\mu$m.

14. Motor vehicle according to one of the preceding claims, **characterised in that** the second capacitor electrode is subdivided into the electrode sections (9) by a plurality of slots (8).

## Revendications

1. Véhicule automobile comprenant un composant métallique prévu côté frontal, côté hayon et/ou sur les côtés, en particulier un pare-chocs, ainsi qu'au moins un dispositif de capteur comprenant un capteur à fonctionnement capacitif et un dispositif de commande associé servant à détecter des collisions, le capteur (2) étant disposé au niveau d'un composant métallique (4) et étant réalisé sous la forme d'un capteur de surface, qui s'étend sur au moins la moitié de la largeur du composant métallique (4), où des informations résultant d'une collision avec un objet peuvent être déterminées à l'aide de la variation de la capacité, due à la déformation du capteur (2) liée à la collision, du capteur (2) du côté du dispositif de commande (10), où le capteur (2) est réalisé sous la forme d'un condensateur à plaques et où une couche constituée d'un diélectrique (7), sur laquelle est installée une deuxième électrode de condensateur (9), est appliquée sur le composant métallique, en particulier sur le pare-chocs (4), lequel forme une électrode de condensateur,
**caractérisé en ce**
**que** la deuxième électrode de condensateur est divisée en diverses sections d'électrode (9) isolées les unes des autres, chaque section d'électrodes (9) étant reliée au dispositif de commande (10).

2. Véhicule automobile selon la revendication 1,
**caractérisé en ce**
**que** le capteur (2) s'étend sur au moins 80 % de la largeur du composant métallique (4), en particulier sur toute sa largeur.

3. Véhicule automobile selon la revendication 1 ou 2,
**caractérisé en ce**
**que** le capteur (2) s'étend sur au moins la moitié de la hauteur, de préférence sur toute la hauteur du composant métallique (4).

4. Véhicule automobile selon l'une quelconque des revendications précédentes,
**caractérisé en ce**
**que** le composant métallique est un pare-chocs.

5. Véhicule automobile selon l'une quelconque des revendications précédentes,
**Caractérisé en ce**
**que** le diélectrique (7) est une matière plastique, en particulier une matière plastique expansée, de préférence un élastomère.

6. Véhicule automobile selon la revendication 5,
**caractérisé en ce**
**que** la matière plastique expansée est un polypropylène expansé.

7. Véhicule automobile selon l'une quelconque des revendications précédentes,
**Caractérisé en ce**
**que** le diélectrique (7) présente une épaisseur comprise dans la plage allant de 1 à 10 cm, en particulier allant de 3 à 7 cm, de préférence une épaisseur de 5 cm.

8. Véhicule automobile selon l'une quelconque des revendications précédentes,
**caractérisé en ce**
**que** la deuxième électrode de condensateur (9) est formée au moyen d'un film métallique, d'un tissu métallique éventuellement renforcé par des fibres ou d'une couche métallique déposée.

9. Véhicule automobile selon la revendication 8,
**caractérisé en ce**
**que** le film métallique, le tissu métallique ou la couche métallique sont constitués d'aluminium ou contiennent de l'aluminium.

10. Véhicule automobile selon la revendication 8 ou 9,
**caractérisé en ce**
**que** le film métallique, le tissu métallique ou la couche métallique présente une épaisseur comprise entre 10 et 1000 $\mu$m, en particulier comprise entre 100 et 500 $\mu$m.

11. Véhicule automobile selon l'une quelconque des revendications 8 à 10,
**caractérisé en ce**
**que** le film métallique, le tissu métallique ou la couche métallique déposée sont disposés sur un support (11), en particulier sur un support en matière plastique, ou entre deux supports (11), en particulier des supports en matière plastique.

12. Véhicule automobile selon la revendication 11,
**caractérisé en ce**
**qu'**un support (11) est un film en matière plastique, en particulier en polyester.

13. Véhicule automobile selon la revendication 12,
**caractérisé en ce**
**qu'**un support (11) présente une épaisseur comprise dans la plage allant de 100 à 1000 $\mu$m.

14. Véhicule automobile selon l'une quelconque des revendications précédentes,
**caractérisé en ce**
**que** la deuxième électrode de condensateur est divisée par plusieurs entailles (8) dans les sections d'électrode (9).

FIG. 1

FIG. 2

FIG. 3

FIG. 4

## FIG. 5

## FIG. 6

## FIG. 7

**EP 2 709 877 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000326808 A

- JP 2000177514 A